# EUROPEAN PATENT SPECIFICATION

(11) **EP 4 474 224 B1**
(45) Date of publication and mention of the grant of the patent: **02.12.2026**
(21) Application number: 24315265.9
(22) Date of filing: 03.06.2024
(51) Int. Cl.: B60R 16/023

(54) **IMPROVED ELECTRIC BOX FOR A VEHICLE**
VERBESSERTER ELEKTRISCHER KASTEN FÜR EIN FAHRZEUG
BOÎTIER ÉLECTRIQUE AMÉLIORÉ POUR VÉHICULE

(30) Priority: 09.06.2023 IT 202300011862
(43) Date of publication of application: 11.12.2024
(73) Proprietor: IVECO FRANCE S.A.S., 69200 Vénissieux (FR)
(72) Inventor: Leparc, Benjamin, 69200 VENISSIEUX (FR); Cailleaud, Dany, 69200 VENISSIEUX (FR)
(74) Representative: Studio Torta S.p.A.

(56) References cited:
- CN-A- 105 539 157
- CN-U- 217 545 319
- CN-U- 218 415 356
- DE-A1- 102021 126 411

## Description

### TECHNICAL FIELD

The present invention concerns an electric box for a vehicle.

The present invention finds its preferred, although not exclusive, application in electrical vehicles such as public transport vehicles. Reference will be made to this application by way of example below.

### BACKGROUND OF THE INVENTION

Vehicles, such as public transport vehicles, tends to be more and more electrified in order to reduce the pollution due to internal combustion engine. To this end, hybrid and electric vehicles are more and more used and developed.

Hybrid and electric vehicles need to transfer electric energy between electric machines and energy storing means and other electric-based devices of the vehicle.

Therefore, it is requested to provide high voltage electrical cables between the aforementioned elements to transfer the electrical energy.

Such electrical cables may need to change direction or split their provided energy to multiple cables. In such case it is needed to use an electrical junction box to allow the passage of electric flow between the different requested ways.

Existing junction box are bulky due to the need of avoiding undesired contacts or electric bridges between electric junctions contained herein.

Moreover, it is needed to provide safer junction box with respect to existing ones that have no physical separation between the different cables connected by the junction box.

Known electrical boxes are disclosed in patent publications CN217545319 U, CN218415356 U, DE102021126411 A or CN1 05539157 A. CN218415356 discloses an electrical box according to the preamble of claim 1.

Therefore, the need is felt to reduce encumbrance of existing electric junction boxes for electric vehicles and to increase their safety thereby maintaining their operative function.

An aim of the present invention is to satisfy the above mentioned needs in a cost-effective and optimized manner.

### SUMMARY OF THE INVENTION

The aforementioned aim is reached by an electric box as claimed in the appended set of claims.

### BRIEF DESCRIPTION OF DRAWINGS

For a better understanding of the present invention, a preferred embodiment is described in the following, by way of a non-limiting example, with reference to the attached drawings wherein:

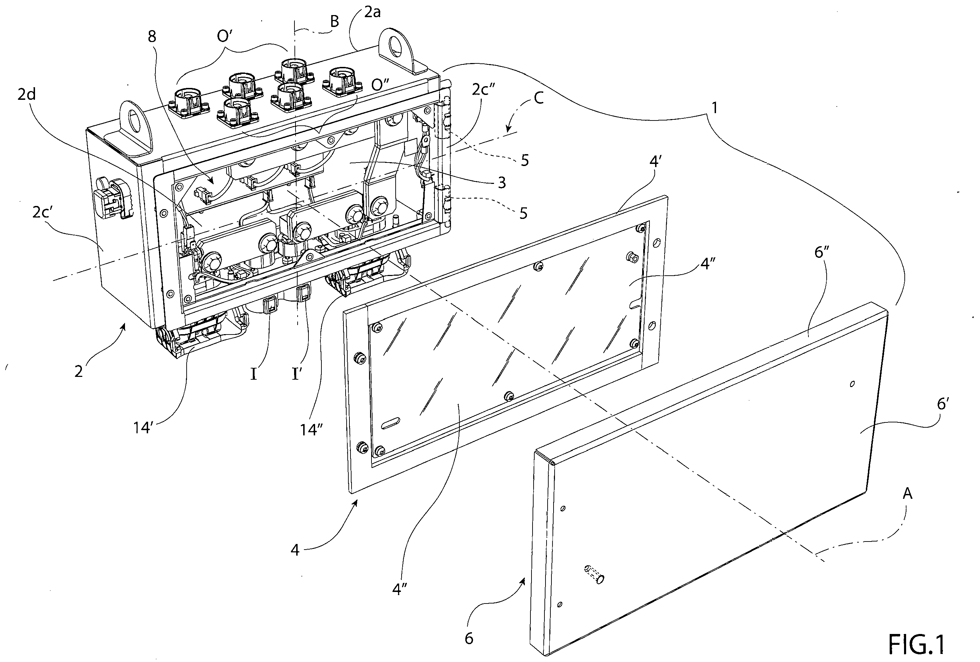

- Figure 1 is a perspective exploded schematic view of an electric box according to the invention;

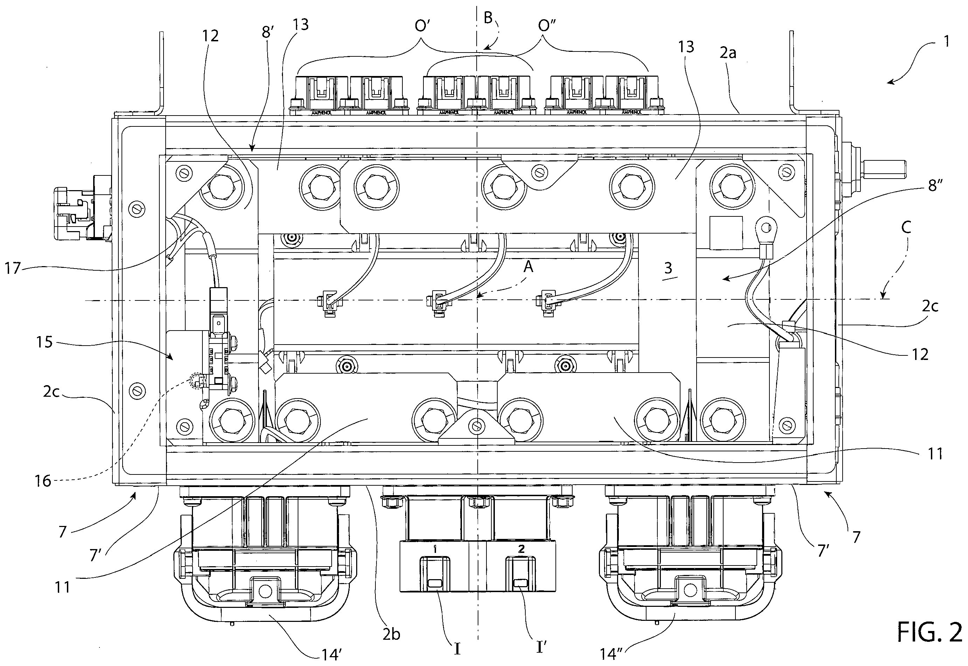

- Figure 2 is a front schematic view of the electric view of Figure 1 with parts removed for sake of clarity;

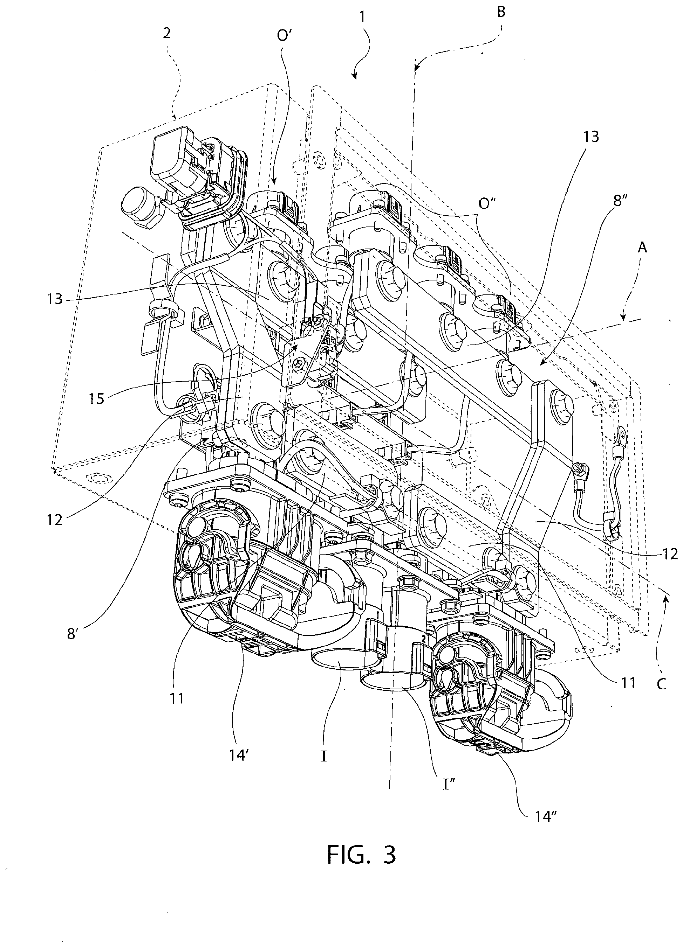

- Figure 3 is bottom perspective schematic view of the electric box of Figure 1 with parts removed for sake of clarity; and
- Figure 4 is a perspective enlarged view of a portion of the electric box according to the invention.

### DETAILED DESCRIPTION OF THE INVENTION

Drawings shown an electric box 1 according to the invention configured to allow distribution of electrical energy between at least one first electric socket I', I" configured to allow electrical connection with a related at least one first electrical cable and at least one second electric socket O', O" configured to allow electrical connection with a related at least one second electrical cable.

In particular, electric box 1 may be used in a vehicle for distribution of electrical energy between electrical cables connecting energy storing means, electric machine and electric devices of the vehicle, that is therefore, preferably, a hybrid or an electric vehicle.

In detail, in the shown embodiment, the electric box 1 is configured to allow electric energy distribution between a pair of first electric sockets I', I" and two lines of second electric sockets O', O", wherein each line comprises, as exemplarily shown, three electric sockets.

The electric box 1 comprises in particular a support structure 2 configured to delimit a space 3 isolated from the external environment, at least selectively.

In detail, the structure 2 has substantial a parallelepiped shape provided with a top and a bottom walls 2a, 2b faced with respect toa vertical axis B perpendicular to a longitudinal axis A of the structure 2, a pair of lateral walls 2c', 2c" faced with respect to a transversal axis C perpendicular to both longitudinal and vertical axis A, B.

The structure 2 further comprises a rear wall 2d and, a closure arrangement 4 faced to this latter along longitudinal axis A and configured to assume a first, opened, configuration wherein allows to reach space 3 from the external environment and a second, closed, configuration, wherein isolate the space 3 from the environment.

The aforementioned pair of first electric sockets I', I" and two lines of second electric sockets O', O" are advantageously realized respectively on the bottom wall 2b and on the top wall 2a.

More preferably, the pair of first electric sockets I' is realized in a central portion of the bottom wall 2b with respect to longitudinal and transversal axis A, C and similarly the two lines of second electric sockets O', O" are realized centered on the top wall 2a with respect to longitudinal and transversal axis A, C.

In further detail, the two lines of second electric sockets O', O" are staggered along transversal direction axis C one with respect to the other so that two electric sockets of the two lines of second electric sockets O', O" are not collinear to an axis parallel to axis A.

In particular, closure arrangement 4 comprises a frame 4' and a transparent wall 4" carried within the frame 4'. The frame 4' is configured to be carried by one of the aforementioned walls 2a, 2b, 2c', 2c" in a movable manner, e.g. by hinge means 5 that are, in the disclosed embodiment, realized on one of lateral walls 2c', 2c". Preferably, transparent wall 4" is made of plexiglass.

The electric box 1 may further comprise a cover arrangement 6 configured to assume a first configuration into which may allow, via closure arrangement 4, to reach space 3 form environment and a second configuration into which avoid to access to the closure arrangement 4, i.e. to space 3.

In detail, cover arrangement 6 comprises a front wall 6' and a perimetral flange 6" extending on at least part of perimeter of the front wall 6" and shaped in order to surround entirely the cover arrangement 4 and fix this latter to structure 2.

In detail, the perimetral flange 6" is fixed to structure 2 via fixing means, such as threaded elements, configured to insert in holes provided in the perimetral flange 6", passing through the frame 4' of the cover arrangement 4 and in seats realized in walls 2a, 2b, 2c', 2c" of the structure 2, in details in flange portions extending through this latter.

The electric box 1 further comprises a fixing means 7 configured to allow the fixing of electric box 1 to a vehicular portion (not shown). In detail, the fixing means 7 may comprise a holes 7' carried by one of walls of structure 2 and suitable for allowing the insertion of fixing means, such as threaded elements, for fixing the structure 2 to the aforementioned vehicular portion.

In the exemplarily shown embodiment, the holes 7' are realized in the bottom wall 2b of the structure 2.

The electric box 1 houses in space 3 a conductive disposition 8 configured to allow electrical connection between the at least one first electric socket I', I" and the at least one second electric socket O', O".

In the disclosed embodiment, the conductive disposition 8 allows to provide electrical connection between the first electric socket I' the first line of second electric sockets O' via a first conductive path 8' and between the first electric socket I' the first line of second electric sockets O' via a second conductive path 8".

In detail, each conductive path 8', 8" comprises three conductive elements 11, 12 and 13 electrically connected together. Preferably, each conductive element 11, 12, 13 comprises a plate-like element such as a lamina realized in metallic material such as copper.

In further detail, such lamina are parallel to a plane containing vertical and transversal axis B, C.

In detail, conductive paths 8', 8" are equal, i.e. they define the same path along axis A, B, C. In further detail, conductive paths 8', 8" are symmetric with respect vertical axis B and are spaced along longitudinal axis A.

In particular, the conductive elements 11, 12, 13 are connected to each other and/or to the at least one first electric socket I', I" and/or to the at least one second electric socket O', O" via electric fixing connections such as threaded connections realized in metallic material.

In detail, each first conductive element 11 extends parallel to the transversal axis C towards the lateral wall 2c' opposite to the other first electric socket I', I". The second conductive element 12 extends vertically from near the bottom wall 2b towards the top wall 2c. Then, the third conductive element 13 extends again along transversal axis C direction back opposite to the extension direction of the first conductive element 11 to reach the respective second electric socket line O', O".

In detail, the second conductive element 12 comprises a pair of terminal portions that are parallel to vertical axis B and an intermediate portion that is inclined. In particular, the two inclined portions of the second conductive elements 12 are inclined in order to come closer to respectively the rear wall 12d or the closing arrangement 4.

According to the above, one of the terminal portions of the second conductive elements 12 are contained in a plane parallel to a plane containing first and third conductive elements 11, 13. In particular, one of the terminal portions of the second conductive element 12 may be contained in the same plane containing first and third conductive elements 11, 13.

Always according to the above-described geometry, the first and third conductive elements are contained into two different planes that are parallel one with respect to the other and distanced along longitudinal directions.

In particular, first and second conductive elements 11, 12 are connected by electric bridges 14', 14". Electric bridges 14', 14" are configured to connect electrically first and second conductive elements 11, 12 indirectly, i.e. by means of electric components (not shown) that can allows, selectively, their electric disconnection. This connection is clearly different with respect to connection between second and third conductive elements 12, 13 that are always electrically connected one to the other.

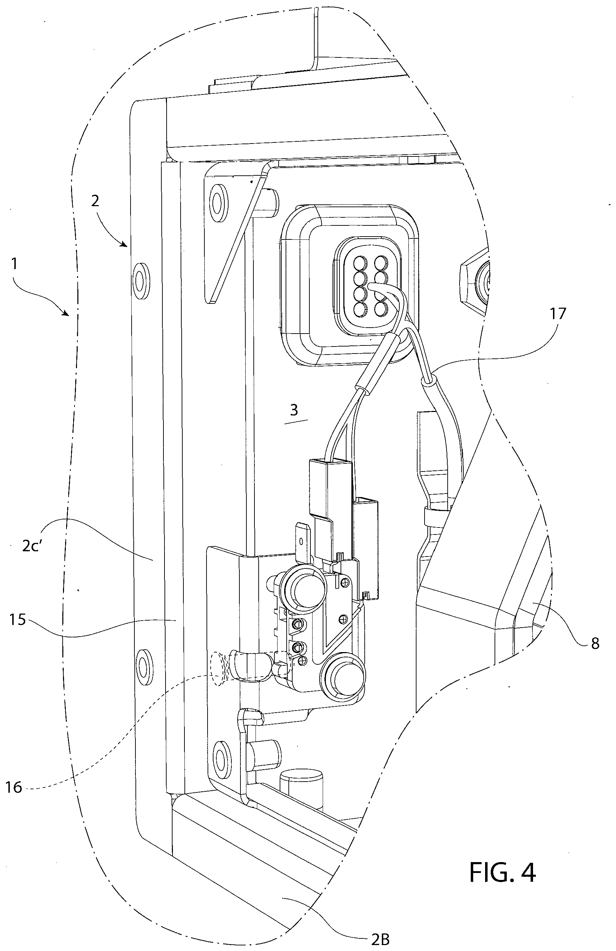

In detail, as best shown in figures 4, the electric box 1 further comprises safety means 15 configured to selectively avoid, i.e. interrupt, electric communication between the at least one first electric socket I', I" and to the at least one second electric socket O', O" if the cover arrangement 6 is detached from structure 2.

In particular, according to the above described embodiment, safety means 15 may avoid, i.e. interrupt, the electric communication in both of paths 8', 8" of the conductive disposition 8.

In particular, the safety means 15 comprises pin 16 configured to assume a first position, inserted, in which cooperates at contact with a portion of an electric circuit 17 that allows electric communication in the conductive disposition 8, i.e. electrically connecting first and second conductive elements 11, 12, and a second position, extracted, in which frees open a portion of electric circuit 17 thereby denies electric communication in said conductive disposition u, i.e. decoupling electrically first and second conductive elements 11, 12.

Preferably, the above electric coupling or decoupling is achieved by electric circuit 17 and the aforementioned electric bridges 14', 14".

In particular, the pin 16 is fixedly carried to cover arrangement 6, in particular by the front wall 6', so that when the cover arrangement 6 is extracted from the structure 2, the conductive disposition 8 cannot cooperate at contact with electric circuit 17. In this way pin 16 acts as a button.

The operation of the embodiment of the invention as described above is the following.

When fixed to the vehicle via fixing means 7, the necessary electrical cables (not shown) are connected to the at least one first electric socket I', I" and to the at least one second electric socket O', O". Electrical energy usually coming from the first electric socket I', I" flow via conductive disposition 8 towards the second electric socket O', O". In detail, the electrical energy flow via first, second and third electric elements 11, 12, 13, passing via electric bridges 14', 14", towards the second electric socket lines O', O".

If the user moves the cover arrangement 6 from structure 2, then pin 16 is extracted from its seat and therefore opens the electric circuit 17 that decouples the elements of the conductive disposition 8 thereby avoiding any possible electric injury.

In view of the foregoing, the advantages of the electric box according to the invention are apparent.

Thanks to the described electric box according to the invention is possible to provide an electric junction between electric cables in a very compact and small space.

The proposed conductive disposition allows to provide in a very small space and with small laminas the transfer of high electrical energy flow.

In detail the proposed conductive disposition allows to support 800 A at 1000V for 15 minutes with an outside temperature of 65°C as required by normative without lack of insulation and with optimal behavior from thermal point of view.

Moreover, the proposed safety system allows to decoupler the first and second electric sockets if the cover is removed from electric box thereby avoiding undesired electric transmission that may lead to fatal injuries.

Indeed, the proposed safety system is fully integrated into the proposed conductive disposition and is intrinsically safe because cannot bypassed by the user.

It is clear that modifications can be made to the described electric box within the scope of protection defined by the claims.

For example, the proposed shape of the cover may be varied according to the specific need and typology of vehicle.

Moreover, the number and shape of conductive elements of the conductive disposition and the number and typology of electrical sockets or they disposition on the structure may be varied.

Furthermore, the proposed safety means may be realized in a different manner with equivalent function of interrupting electrical communication within paths of the conductive disposition.

## Claims

1. Electric box (1) for connecting at least one first electric cable to at least a second electric cable, said electric box (1) comprising a structure (2) extending along a longitudinal axis (A), a vertical axis (B) perpendicular to said longitudinal axis (A) and a transversal axis (C) perpendicular to both said longitudinal and vertical axis (A, B), said structure (2) delimiting a space (3) isolated, in use, from the environment, said electric box (1) comprising at least one first electric socket (I', I") configured to allow connection of said at least one first electric cable and at least one second electric socket (O', O") configured to allow connection of said at least one second electric cable, said electric box (1) comprising a conductive disposition (8) housed within said space (3) and configured to electrically connect said at least one first electric socket (I', I") to said at least one second electric socket (O', O"),
**said** electric box (1) comprising two first electric sockets (I', I") and two lines of second electric sockets (O', O"), said conductive disposition (8) comprising a first electric path (8') connecting electrically one of said first electric sockets (I', I") to one of said lines of second electric socket (O', O") and a second electric path (8') connecting electrically the other of said first electric sockets (I', I") to the other of said lines of second electric socket (O', O"),
wherein said structure (2) has a parallelepiped shape defined by a top and a bottom wall (2a, 2b) faced along said vertical axis (B), a pair of lateral walls (2c', 2c") faced along said transversal axis (C), a rear wall (2d), said at least one first electric socket (I', I") and said at least one second electric socket (O', O") being realized respectively on said bottom walls (2b) and on said top wall (2a), wherein said first and second paths (8', 8") comprises first, second and third conductive elements (11, 12, 13) being laminas of metallic material electrically connected together,
wherein said first conductive element (11) is connected to said at least one first electric socket (I', I") and to said second conductive element (12) and extends parallel to said transversal axis (C) within said space (3),
wherein said third conductive element (13) is connected to said second conductive element (12) and said at least one second electric socket (O', O") and extends parallel to said transversal axis (C) within said space (3),
**characterized in that**
said first and third conductive elements (11, 13) are contained in two different planes parallel one to the other.

2. Electric box according to claim 1, wherein said conductive elements (11, 12, 13) are realized in copper.

3. Electric box according to any of claims 1 or 2, wherein said second conductive element (12) is connected to said at first and third conductive elements (11, 13) and extends along said vertical axis (B) within said space (3).

4. Electric box according to claim 3, wherein said second conductive element (12) is provided with a pair of extremities and a central portion, said pair of extremities being respectively connected to said first and third conductive elements (11, 13) and are parallel to said vertical axis (B), said central portion being inclined with respect to said vertical axis (B).

5. Electric box according to any of preceding claims, wherein said first and second conductive elements (11, 12) are connected via electric bridges (14', 14").

6. Electric box according to any of the preceding claims, comprising fixing means (7) configured to allow the fixation of said structure (2) to a portion of a vehicle.

7. Electric box according to any of the preceding claims, wherein said walls (2a, 2b, 2c', 2c", 2d) are realized as one piece, and further comprising a closure assembly (4) configured to selectively isolate said space (3) from the environment.

8. Vehicle comprising at least one first electric cable and at least a second electric cable connected to different operative elements of said vehicle and an electric box (1) according to any of the preceding claims for electrically connecting together said at least one first electric cable and at least a second electric cable.

## Patentansprüche

1. Elektrischer Kasten (1) zum Verbinden mindestens eines ersten elektrischen Kabels mit mindestens einem zweiten elektrischen Kabel, wobei der elektrische Kasten (1) eine Struktur (2) umfasst, die sich entlang einer Längsachse (A), einer vertikalen Achse (B) senkrecht zu der Längsachse (A) und einer Querachse (C) senkrecht zu sowohl der Längs- als auch der vertikalen Achse (A, B) erstreckt, wobei die Struktur (2) einen Raum (3) begrenzt, der im Gebrauch von der Umgebung isoliert ist, wobei der elektrische Kasten (1) mindestens eine erste elektrische Steckdose (I', I"), die konfiguriert ist, um eine Verbindung des mindestens einen ersten elektrischen Kabels zu ermöglichen, und mindestens eine zweite elektrische Steckdose (O', O"), die konfiguriert ist, um eine Verbindung des mindestens einen zweiten elektrischen Kabels zu ermöglichen, umfasst, wobei der elektrische Kasten (1) eine leitfähige Anordnung (8) umfasst, die in dem Raum (3) untergebracht und konfiguriert ist, um die mindestens eine erste elektrische Steckdose (I', I") mit der mindestens einen zweiten elektrischen Steckdose (O', O") elektrisch zu verbinden,
wobei der elektrische Kasten (1) zwei erste elektrische Steckdosen (I', I") und zwei Reihen von zweiten elektrischen Steckdosen (O', O") umfasst, wobei die leitfähige Anordnung (8) einen ersten elektrischen Pfad (8'), der eine der ersten elektrischen Steckdosen (I', I") mit einer der Reihen der zweiten elektrischen Steckdose (O', O") elektrisch verbindet, und einen zweiten elektrischen Pfad (8'), der die andere der ersten elektrischen Steckdosen (I', I") mit der anderen der Reihen der zweiten elektrischen Steckdose (O', O") elektrisch verbindet, umfasst,
wobei die Struktur (2) eine Parallelepipedform aufweist, die durch eine obere und eine untere Wand (2a, 2b), die entlang der vertikalen Achse (B) ausgerichtet sind, ein Paar von Seitenwänden (2c', 2c"), die entlang der Querachse (C) ausgerichtet sind, und eine Rückwand (2d) definiert ist, wobei die mindestens eine erste elektrische Steckdose (I', I") und die mindestens eine zweite elektrische Steckdose (O', O") jeweils an den unteren Wänden (2b) und an der oberen Wand (2a) realisiert sind, wobei die ersten und zweiten Pfade (8', 8") erste, zweite und dritte leitfähige Elemente (11, 12, 13) umfassen, die Lamellen aus metallischem Material sind, die elektrisch miteinander verbunden sind,
wobei das erste leitfähige Element (11) mit der mindestens einen ersten elektrischen Steckdose (I', I") und mit dem zweiten leitfähigen Element (12) verbunden ist und sich parallel zu der Querachse (C) in dem Raum (3) erstreckt,
wobei das dritte leitfähige Element (13) mit dem zweiten leitfähigen Element (12) und der mindestens einen zweiten elektrischen Steckdose (O', O") verbunden ist und sich parallel zu der Querachse (C) in dem Raum (3) erstreckt,
**dadurch gekennzeichnet, dass**
die ersten und dritten leitfähigen Elemente (11, 13) in zwei verschiedenen Ebenen enthalten sind, die parallel zueinander sind.

2. Elektrischer Kasten nach Anspruch 1, wobei die leitfähigen Elemente (11, 12, 13) aus Kupfer hergestellt sind.

3. Elektrischer Kasten nach einem der Ansprüche 1 oder 2, wobei das zweite leitfähige Element (12) mit den ersten und dritten leitfähigen Elementen (11, 13) verbunden ist und sich entlang der vertikalen Achse (B) in dem Raum (3) erstreckt.

4. Elektrischer Kasten nach Anspruch 3, wobei das zweite leitfähige Element (12) mit einem Paar von Enden und einem mittleren Abschnitt versehen ist, wobei das Paar von Enden jeweils mit den ersten und dritten leitfähigen Elementen (11, 13) verbunden ist und parallel zu der vertikalen Achse (B) ist, wobei der mittlere Abschnitt in Bezug auf die vertikale Achse (B) geneigt ist.

5. Elektrischer Kasten nach einem der vorhergehenden Ansprüche, wobei die ersten und zweiten leitfähigen Elemente (11, 12) über elektrische Brücken (14', 14") verbunden sind.

6. Elektrischer Kasten nach einem der vorhergehenden Ansprüche, umfassend Befestigungsmittel (7), die konfiguriert sind, um die Befestigung der Struktur (2) an einem Abschnitt eines Fahrzeugs zu ermöglichen.

7. Elektrischer Kasten nach einem der vorhergehenden Ansprüche, wobei die Wände (2a, 2b, 2c', 2c", 2d) aus einem Stück hergestellt sind und ferner eine Verschlussanordnung (4) umfassen, die konfiguriert ist, um den Raum (3) selektiv von der Umgebung zu isolieren.

8. Fahrzeug, umfassend mindestens ein erstes elektrisches Kabel und mindestens ein zweites elektrisches Kabel, die mit unterschiedlichen Betriebselementen des Fahrzeugs verbunden sind, und einen elektrischen Kasten (1) nach einem der vorhergehenden Ansprüche zum elektrischen Verbinden des mindestens einen ersten elektrischen Kabels und des mindestens einen zweiten elektrischen Kabels miteinander.

## Revendications

1. Boîtier électrique (1) pour la connexion d'au moins un premier câble électrique à au moins un deuxième câble électrique, ledit boîtier électrique (1) comprenant une structure (2) s'étendant le long d'un axe longitudinal (A), d'un axe vertical (B) perpendiculaire audit axe longitudinal (A) et d'un axe transversal (C) perpendiculaire à la fois audit axe longitudinal et audit axe vertical (A, B), ladite structure (2) délimitant un espace (3) isolé, en utilisation, de l'environnement, ledit boîtier électrique (1) comprenant au moins une première prise électrique (I', I") configurée pour permettre la connexion dudit au moins un premier câble électrique et au moins une deuxième prise électrique (O', O") configurée pour permettre la connexion dudit au moins un deuxième câble électrique, ledit boîtier électrique (1) comprenant une disposition conductrice (8) logée au sein dudit espace (3) et configurée pour connecter électriquement ladite au moins une première prise électrique (I', I") à ladite au moins une deuxième prise électrique (O', O"),
ledit boîtier électrique (1) comprenant deux premières prises électriques (I', I") et deux rangées de deuxièmes prises électriques (O', O"), ladite disposition conductrice (8) comprenant un premier chemin (8') électrique connectant électriquement l'une desdites premières prises électriques (I', I") à l'une desdites rangées de deuxièmes prises électriques (O', O"), et un deuxième chemin (8') électrique connectant électriquement l'autre desdites premières prises électriques (I', I") à l'autre desdites rangées de deuxièmes prises électriques (O', O"),
dans lequel ladite structure (2) possède une forme de parallélépipède définie par une paroi supérieure et une paroi inférieure (2a, 2b) se faisant face le long dudit axe vertical (B), une paire de parois latérales (2c', 2c") se faisant face le long dudit axe transversal (C), une paroi arrière (2d), ladite au moins une première prise électrique (I', I") et ladite au moins une deuxième prise électrique (O', O") étant réalisées respectivement sur ladite paroi inférieure (2b) et sur ladite paroi supérieure (2a), dans lequel lesdits premier et second chemins (8', 8") comprennent des premier, deuxième et troisième éléments conducteurs (11, 12, 13) qui sont des lamelles de matériau métallique électriquement connectées ensemble,
dans lequel ledit premier élément conducteur (11) est connecté à ladite au moins une première prise électrique (I', I") et audit deuxième élément conducteur (12) et s'étend parallèlement audit axe transversal (C) au sein dudit espace (3),
dans lequel ledit troisième élément conducteur (13) est connecté audit deuxième élément conducteur (12) et à ladite au moins une deuxième prise électrique (O', O") et s'étend parallèlement audit axe transversal (C) au sein dudit espace (3),
**caractérisé en ce que**
lesdits premier et troisième éléments conducteurs (11, 13) sont contenus dans deux plans différents parallèles l'un à l'autre.

2. Boîtier électrique selon la revendication 1, dans lequel lesdits éléments conducteurs (11, 12, 13) sont réalisés en cuivre.

3. Boîtier électrique selon l'une quelconque des revendications 1 ou 2, dans lequel ledit deuxième élément conducteur (12) est connecté auxdits premier et troisième éléments conducteurs (11, 13) et s'étend le long dudit axe vertical (B) au sein dudit espace (3).

4. Boîtier électrique selon la revendication 3, dans lequel ledit deuxième élément conducteur (12) est muni d'une paire d'extrémités et d'une partie centrale, ladite paire d'extrémités étant respectivement connectées auxdits premier et troisième éléments conducteurs (11, 13) et sont parallèles audit axe vertical (B), ladite partie centrale étant inclinée par rapport audit axe vertical (B).

5. Boîtier électrique selon l'une quelconque des revendications précédentes, dans lequel lesdits premier et deuxième éléments conducteurs (11, 12) sont connectés via des ponts électriques (14', 14").

6. Boîtier électrique selon l'une quelconque des revendications précédentes, comprenant des moyens de fixation (7) configurés pour permettre la fixation de ladite structure (2) à une partie d'un véhicule.

7. Boîtier électrique selon l'une quelconque des revendications précédentes, dans lequel lesdites parois (2a, 2b, 2c', 2c", 2d) sont réalisées d'un seul tenant, et comprenant en outre un ensemble de fermeture (4) configuré pour isoler sélectivement ledit espace (3) de l'environnement.

8. Véhicule comprenant au moins un premier câble électrique et au moins un deuxième câble électrique connectés à différents éléments fonctionnels dudit véhicule et un boîtier électrique (1) selon l'une quelconque des revendications précédentes pour la connexion électrique desdits au moins un premier câble électrique et au moins un deuxième câble électrique ensemble.
